# EUROPEAN PATENT APPLICATION

(11) **EP 2 236 025 A1**
(43) Date of publication of application: **06.10.2010**
(21) Application number: 10158682.4
(22) Date of filing: 31.03.2010
(51) Int. Cl.: A01K 73/02

(54) **Improved Pelagic Trawl Using T90 Netting**

(30) Priority: 31.03.2009 US 211521 P; 20.08.2009 IS 8844
(71) Applicant: Hampidjan HF., 220 Hafnarfjördur (IS)
(72) Inventor: Gunnarsson, Gudmundur, 220, Hafnarfjordur (IS); Gretarsson, Jon A., 810, Hveragerdi (IS); Safwat, Sherif, Bainbridge Island, WA 98110 (US)
(74) Representative: Arnason Faktor

(57) **Abstract**

A trawl system component includes T90 (23) netting and a first seam (22) formed of a first netting panel (21) attached to a second netting panel (23) with the first seam (22) having a seam ratio of less than one. The first netting panel (21) is selected from a group consisting of:
i) T0 meshes; and
ii) T90 meshes having a mesh size of 160mm or less.

The second netting panel (23) is T90 netting having a mesh size of 160mm or less. The stretch measure of the second panel's (23) netting has a lesser horizontal value than the horizontal stretch measure of the first panel's (21) netting. The first panel (21) is situated forward of the first seam (22), and the second panel (23) is situated aft thereof. The trawl system component also third netting panel (26) secured into the trawl system component by a third seam (25) that is located further aft in the component from the location of the first seam (22).

## Description

The present disclosure relates to trawl nets, especially pelagic trawls and bottom trawls as used to catch fish including but not limited to fish known as cod, flounder, sole, haddock, rockfish, groundfish, flatfish, roundfish, blue whiting, mackerel, herring, capelin, Redfish, Alaska Pollock, other Pollock, Pearlside and other fish species. More particularly, the present disclosure relates to:
1. the "back end" or "belly" of trawl nets, those terms being interchangeable;
2. the "tube" including "intermediate tube" of trawls, those terms being interchangeable; and
3. yet more particularly to the "codend", "bailer" or "brailer bag" of trawl nets, again those terms being interchangeable.

### Background Art

T90 is a name applied to conventional machine made netting when turned 90 degrees (90°) in relation to the direction usually used in making a trawl. The concept of 'turned mesh' or T90 netting is not new. The use of T90 netting has been investigated since the late 1980s. Testing has demonstrated that T90 netting when used in certain ways possesses some advantageous properties over machine made netting used in the conventional way, usually identified as T0 netting. For example, laboratory tests indicate that T90 netting is stronger than T0 netting. T90 netting technology has been developed for whole trawl application by the Icelandic trawl manufacturer Fjardanet that is part of the Hampidjan group. When used in the codend of a trawl, T90 netting exhibits better catch quality, better selectivity and more efficiency than codends with netting turned in the conventional direction. Experiences using T90 netting in the bellies and codends of groundfish trawls targeting cod found T90 netting filtered out large proportions of undersize cod and the nets had the added benefit of being easier to tow. However trawls and especially their brailer bags formed of T90 netting have acquired a reputation for rupturing under operating conditions in which a brailer bag made of T0 netting does not rupture. Furthermore, trawls or portions of trawls such as codends or brailer bags formed from T90 netting have acquired a reputation for causing excessive gilling of fish, especially in the backend or "belly" of trawls, the "tube" that is forward of a codend or brailer bag, as well as the codend or brailer bag itself. These problems with T90 netting have occurred despite all the knowledge available in the industry. For the preceding reasons T90 netting has not been widely accepted in the industry.

There exist various ways of seaming together netting panels forming trawls, including different tapers, such as point and bar taper, all point taper, and the like. There are a plethora of factors involved in selecting how to seam one panel of netting to another in making a trawl. Furthermore, there exists no guarantee that one way of seaming panels together that is successful for one type of netting and trawl is going to be successful for another type of netting and trawl. That is to say, there is no assurance that a particular seaming, bating, taper, hang ratio, ribline non-use or ribline use with or without hangs or a succession of hang ratios and so forth that successfully functions for one type of netting in a particular portion of a trawl will also function successfully for another type of netting in that particular portion of a trawl, or that what functions well in one portion of a trawl will also function well in a different portion of a trawl.

Thus far, attempts to utilize T90 netting in the same way as T0 netting have failed, with excessive gilling of fish being the main problem, and tearing being another problem. As mentioned previously, despite being known for a long time that T90 netting exhibits advantageous properties, such as an the ability to increase water flow which is a long felt desire in the industry, due to T90 netting's unpredictability, large costs associated with a faulty product such as a trawl and/or codend, and losses in operational revenues from repeated failures of T90 netting to be used as is T0 netting, T90 netting has failed to become widely used in the industry, and has, in fact, earned a generally negative reputation.

### Definitions:

"Panel" means a portion of netting formed of a plurality of meshes. Panels are used in a structure formed of netting, such as a codend. Panels of a distinct mesh type may include all or only a part of the netting that is between two or more selvedges, riblines or "corners" of a trawl. Panels are connected to one another along their fore and aft edges by seams. Synonyms for the word "panel" include "netting panel", "portion of netting", "piece of netting", "section of netting", and other.

"Seam" is used as both a noun and a verb. As a noun "seam" means the connection zone or portion of a trawl where any two or more portions and/or panels of netting are connected to one another, especially along forward and aft edges, and where each portion and/or panel of netting includes at least several full mesh cells. As a verb "seam" means to connect or join together a zone or portion of a trawl. Most commonly, two different panels of machine made netting are hand sewn to one another by hand weaving a series of half mesh used to connect the two or more portions and/or panels of netting. "Seam" shall not include the connection point of netting connected to headropes, footropes, sidelines, riblines or the like (netting connected to such lines, any lines and/or ropes not generally known in the industry as netting that is part of a seam), although where two or more portions and/or panels of netting are connected to one another, even if such lines and/or ropes are also connected to one or more of such portions and/or panels, that shall be known as a seam.

### Summary of Invention

An object of the present disclosure is to provide an improved way for using T90 netting in a codend for a trawl.

Another object of the present disclosure is to provide a way for using T90 netting in a codend for a trawl that reduces gilling in comparison with former ways for using T90 netting in a trawl's codend.

Another object of the present disclosure is to provide a more reliable way for using T90 netting in a trawl's codend.

Another object of the present disclosure is to provide a way for using T90 netting in a belly, tube, brailer or codend of a trawl so that it is more reliable.

Briefly the present disclosure is a trawl system component and a method of producing a trawl system component selected from a group consisting of a trawl, a belly, an intermediate tube and a codend. The trawl system component includes T90 netting with at least a portion of the trawl system component including a first seam formed of a first panel of netting attached to a second panel of netting, the first seam having a seam ratio of less than one. At least a portion of the first panel of netting mainly is netting selected from a group consisting of:
i) T0 meshes; and
ii) T90 meshes having a mesh size of 160mm or less.

At least a portion of the second panel of netting mainly is T90 netting having a mesh size of one hundred sixty mm or less. The netting forming the at least a portion of the second panel of netting has a lesser horizontal stretch measure value than the horizontal stretch measure value of netting forming the at least a portion of the first panel of netting. Within a trawl, the first panel of netting is situated forward of the first seam, and the second panel of netting is situated aft of the first seam. The trawl system component also includes at least a second seam located further aft in the at least a portion of the trawl system component from the location of the first seam. The second seam securing a third panel of netting into the trawl system component that is situated aft of the second seam with the third panel of netting being formed of T0 meshes.

These and other features, objects and advantages will be understood or apparent to those of ordinary skill in the art from the following detailed description of the preferred embodiment as illustrated in the various drawing figures.

### Brief Description of Drawings

FIG. 1 is a plan view of a mesh cell of T90 netting having knots, connection zones or couplers and mesh legs formed of twines;
FIG. 2 is a plan view of a knot of conventional, standard knotted netting mesh when in the T0 orientation;
FIG. 3 is a plan view of a portion of a codend or a tube of a trawl in accordance with the present disclosure; and
FIG. 4 is a plan view of a trawl that includes a codend in accordance with the present disclosure.

### Detailed Description

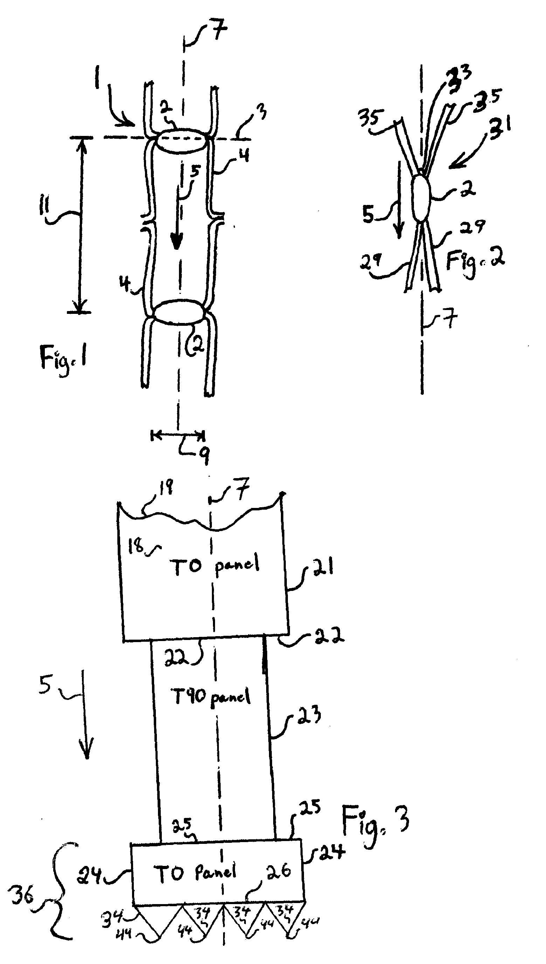

FIG. 1 shows a mesh cell 1 of T90 netting having knots 2 and mesh legs 4 formed of twines. The knot 2 has a long dimension and a short dimension. The long dimension of the knot 2 has an axis that is either coaxial and/or parallel to or generally coaxial and/or parallel to imaginary dashed line 3. The short dimension of the knot 2 is either coaxial and/or parallel to or generally coaxial and/or parallel to imaginary dashed line 7. The dashed line 7 also indicates the longitudinal axis of the trawl. An arrow 5 indicates a theoretical direction of water flow across the T90 mesh cell 1 during towing of the trawl in a straight line in calm water. As shown, the long dimension of knot 2 is perpendicular to either or both the water flow vector 5 as well as the longitudinal axis 7 of the trawl, or is at least more perpendicular to the longitudinal axis 7 of the trawl than is the short dimension of the mesh cell 1.

For the purpose of the present disclosure the terms "T90" and "T90 netting" shall include any netting:
1. having a knot 2 that has a long dimension and a short dimension, where the long dimension of the knot 2 is perpendicular to or generally perpendicular to the short dimension of the knot 2, or at least is not parallel to the short dimension of the knot 2; and
2. when such netting is disposed in a trawl such that the long dimension of the knot 2 and/or axis of the long dimension indicated by the dashed line 3 is intended to be and/or actually is more perpendicular to the longitudinal axis 7 of the trawl than is the short dimension of the knot 2.
Such dimensions for knots 2 exist in knotted nettings. In some knotless nettings there exist couplers and/or connection zones also having a long dimension and a short dimension with orientations for their couplers and/or connection zones being similar to the knots 2 as described above. When such nettings are oriented in a trawl as characterized above, such nettings are included in the definitions of the terms "T90" and "T90 netting" whether knotted or knotless.

In continued reference to FIG. 1, the stretched open T90 mesh cell 1 has a T90 mesh span 11 along the long dimension of the mesh cell 1, and the long dimension of knot 2 has a length 9 that is approximately ¼, or 25%, of the T90 mesh span 11 along the long dimension of the mesh cell 1. The T90 mesh span 11 differs from the "mesh size" of the mesh cell 1, and should not be confused with "mesh size", and "mesh size" as referred to herein shall be defined according to industry standard. T90 mesh cells 1 having ratios for the length 9 of the long dimension of the knot 2 relative to the value of the stretch measure of the mesh, as measured according to industry standard for a T0 mesh known as "knot to knot", that are at least 7% are preferred, with at least 10% being yet more preferred, with 12% being preferred over 10%, with 15% being preferred over 12%, with 17% being preferred over 15%, with 20% being preferred over 17%, and with at least 20% but in some cases at least 25% and up to greater than 50% being optimal are most useful for the teachings of the present disclosure. However, experimentation can provide alternative ratios for the preceding parameters that are still useful though not disclosed herein, and such are intended to be encompassed within the scope of the teachings of the instant disclosure.

It is particularly important that the percentage of mesh opening provided by T90 mesh cells 1 be sized so as not to gill the target specie of fish, while also permitting escape of undersized and/or juveniles of such target specie especially in codends and tubes. Furthermore, it is particularly important to the best mode of the present disclosure that the diameter of a twine forming mesh legs 4 is at least 1.5% and preferably at least 2% of the mesh size of the mesh cell 1, also when measured "knot to knot" in the fashion described above. Presently, preferably the diameter of a twine forming mesh legs 4 is less than 3.5% of the mesh size of the mesh cell, with less than 3% being more preferred, with less than 2.5% being yet more preferred. However, experimentation can provide alternative ratios for the preceding parameters that are still useful though not disclosed herein, and such are intended to be encompassed within the scope of the teachings of the instant disclosure.

FIG. 2 shows a knot 2 oriented for a T0 mesh cell 31 of knotted netting as standard in the industry. FIG. 2 shows the knot 2 together with a twine portion 33 separating mesh legs 35 on one side of the knot 2 and being absent on the other side of the knot 2 and thus not being present to separate mesh legs 29. As is well known to those skilled in the art of machine made knotted netting, a continuous length of twine that passes through the knot 2 forms both of the mesh legs 35, and similarly a continuous length of twine passing through the knot 2 forms both of the mesh legs 29. When used to form netting panels in a trawl in accordance with the present disclosure, the panels are preferably formed of "one face" netting, i.e. netting where the visible side of all the knots 2 on one side of the netting panel's plane have the same appearance, i.e. the same construction, and have a different appearance and/or construction than all the knots 2 on the other side of the plane of netting. That is, on one side of the panel the knots 2 show the "cross" or "three points", whereas on the other side of the panel the knots 2 show the "band" or "wedding ring". Preferably, in order to shed jellyfish and slow swimming marine life, the knots 2 are oriented with the twine portion 33 positioned in the trawl so as to face the front of the trawl (that shall be considered as facing the oncoming water water flow vector 5). Also, to increase abrasion resistance the one face netting on at least the bottom and side panels of the trawl shall be oriented to have the "three points" and/or "cross" facing and/or positioned on the outside of the trawl, and when used in codends on the top panel as well. For bellies of trawls the top panel netting shall have the "three points" facing and/or positioned on the inside of the trawl.

However, although in the instant example of FIG. 2 it is intended to show a T0 mesh cell 31 formed of knotted netting, as indicate by twine portion 33 between mesh legs 35 on one side of the knot 2 and being absent on the other side of the knot 2, for the purpose of the instant disclosure the term "T0" and "T0 netting" shall include:
(a) any T0 netting as traditionally understood in the industry;
(b) any netting having a coupler that has a dimension to the coupler that is longer than another dimension to the coupler, e.g. its coupler has a long dimension and a short dimension perpendicular to or generally perpendicular to its coupler's long dimension, such as some knotless nettings, and when the long dimension and/or long axis of the coupler's long dimension is more parallel to the long axis of the trawl than is the axis of the coupler's short dimension; and
(c) hand spliced netting, including eye-to-eye spliced netting.

FIG. 3 shows a portion of a codend of the present disclosure, and also can be used to show a portion of a tube (including "intermediate tube") of the present disclosure. What one person might term a codend attached to the aft end of a tube, another person might describe with different terminology. Thus, FIG. 3 is intended to indicate a codend of the present disclosure, such as might be a codend for a bottom trawl, or such as might be a codend for a pelagic trawl, or such as might be a tube of either a bottom trawl or of a pelagic trawl further having a codend attached to its aft portion (or what some in the art might merely term a "bag").

FIG. 3 shows how T90 netting is combined with T0 netting in order to form a presently preferred embodiment of a codend in accordance with present disclosure. The fact that such codend forward portion 18 communicates with a portion of the trawl forward of itself, whether such forward portion 18 is considered to be part of a tube or is considered to be part of the codend including part of same forward portion 18 is intended to be indicated by cut away forward edge portion 19 of the codend. Netting panels 21, 23 and 24 indicate netting panels forming a portion of a codend that could be a typical brailer bag type codend as may be included in trawls used in the North Atlantic. Such brailer bag type codends usually lack hung in riblines, and are used for catching herring, capelin, pearlside or any other pelagic fish. Alternatively, the panels 21, 23 and 24 could illustrate a typical rib-lined codend having hung in riblines, and are used for catching cod, roundfish, flatfish, groundfish, Pollock, Alaska Pollock or any fish.

In continued reference to FIG. 3, netting panel 21 is formed of T0 netting and/or T90 netting having a mesh size greater than one hundred sixty mm (160 mm), and netting panel 24 is formed of T0 netting. Netting panel 23 is situated between netting panels 21 and 24 and is formed of T90 netting. The horizontal stretch measure of the netting in panel 23 at seam 22 is less than the horizontal stretch measure of the netting in panel 21 at same seam 22. Similarly, but oppositely, the horizontal stretch measure of the netting in panel 23 at seam 25 is less than the horizontal stretch measure of the netting in panel 24 at same seam 25. The netting forming netting panel 24 preferably is T0 netting.

The advantage of:
1. seaming the T90 netting panel 23 to the T0 netting panel 24 at seam 25, where the T0 netting panel is aft of the seam 25 and the T90 netting panel is forward of the same seam; while
2. also having T0 netting panel 21 (that can include T90 netting having a mesh size greater than one hundred sixty mm {160 mm}) in a more forward zone of the codend seamed to the T90 netting panel 23 at seam 22
is that such a construction exhibits greater reliability of fishing operations. The enhanced reliability of fishing operations includes greater durability during haulback and retrieval of caught fish, especially when the netting panel 24 is proximal to or forming the aft most portion of the codend. The preceding combination of T90 and/or T0 panels 21, 23 and 24 illustrated in FIG. 3 is contrary to the state of the art and trend in the industry, and produces an unanticipatable enhancement of fishing operations reliability.

Netting panel 24 at seam 25 may have a lesser stretch measure value than does netting panel 23 at seam 25. However in order to most promote fish flow and quality of catch, in certain embodiments the stretch measure value of netting panel 24 at seam 25 is at least the same as, or is greater than the stretch measure value of netting panel 23 at seam 25, and may preferably be greater than is the stretch measure value of netting panel 21 at seam 22.

Where the illustration of FIG. 3 is used in accordance with the present disclosure for assembling T90 and T0 netting for a codend of a trawl, then the codend may terminate with netting aft of seam 25 having netting panel 24 and straight seam 26. However, the panel 24 preferably terminates with two or more triangular, pyramidal, truncated pyramidal, or otherwise tapered end portions 34 that are joined at their proximal edges and tied off and/or laced together at their final points 44 so as to form a terminal end portion 36 of the codend. Fastened together in this way, as shall readily be apparent to those skilled in the art upon having read the instant disclosure the tapered end portions 34 establish a plane of netting perpendicular to and/or more perpendicular to the longitudinal axis 7 of the trawl and/or to the intended longitudinal axis 7 of the trawl than parallel to the longitudinal axis 7. The tapered end portions 34 are formed of the same netting type and orientation as the netting panel 24, with the tapered end portions 34 as depicted in FIG. 3 lying in a flat plane and not connected to one another in order to permit better visualize the orientation of netting forming the tapered end portions 34, as well as forming netting panel 24, relative to longitudinal axis 7.

However, where the illustration of FIG. 3 is used in accordance with the present disclosure for assembling T90 and T0 netting for a tube, there is additional netting connected aft of seam 26 that forms either:
1. a further portion of the tube that ultimately communicates with a codend; or
2. a portion of a codend.
When used for assembling a tube, the tapered end portions 34 are preferably omitted in favor of connecting the seam 26 at the aft edge of the panel 24 to additional netting panels that are constructed and configured so as to form:
1. an open tubular shape;
2. a conical shape; or
3. a frustrum of a conical shape.

It is to be understood that whatever construction of the present disclosure may be selected for use in forming the terminal end portion 36 that such construction shall include various elements not particularly pertinent to describing the novel aspects of the present disclosure and are thus not shown, such as but not limited to, knotting lines, lacing lines, hardware, chaffing gear and the like.

Thus, FIG. 3 of the present disclosure teaches a trawl system component selected from a group consisting of a trawl, a belly, an intermediate portion, a tube and a codend. The disclosed trawl system component includes T90 netting, at least a portion of the trawl system component includes a first seam 22 formed of a first netting panel 21 attached to a second netting panel 23, the first seam 22 having a seam ratio of less than one, at least a portion of the trawl system component includes:
a) netting forming at least a portion of the first netting panel 21 mainly being netting selected from a group consisting of:
   i) T0 meshes; and
   ii) T90 meshes having a mesh size of 160mm or less;
b) netting forming at least a portion of the second netting panel 23 mainly being T90 netting having a mesh size of one hundred sixty mm or less, the netting forming the at least a portion of the second netting panel 23 having a lesser horizontal stretch measure value than the horizontal stretch measure value of netting forming the at least a portion of the first netting panel 21;
c) the first netting panel 21 being situated forward of the first seam 22 and the second netting panel 23 being situated aft of the first seam 22; and
d) at least a second seam 25 located further aft in the at least a portion of the trawl system component from the location of the first seam 22, the second seam 25 having a third netting panel 24 situated aft of the second seam 25, the third netting panel 24 being formed of netting formed of T0 meshes.

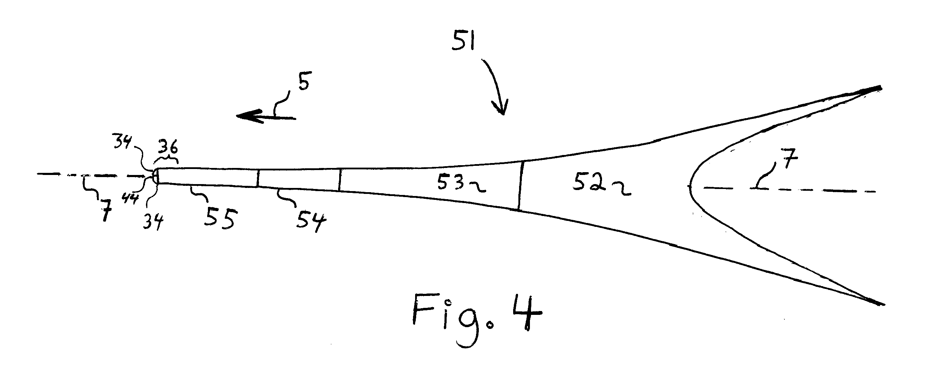

FIG. 4 shows a side plan view of trawl 51 showing one out of four sides of a four sided trawl of the present disclosure. The trawl 51 includes front part 52, belly 53, intermediate tube 54 and codend 55. The codend 55 also includes terminal end portion 36 having tapered end portions 34. The tapered end portions 34 do not appear truncated or tapered due to the fact that the tapered end portions 34 have been seamed together at their proximal edges. Thus seamed together, the tapered end portions 34 form a sheet of netting that due to pressure created by water flow vector 5 acquire a curved shape having a tangent plane that is perpendicular to the direction of water flow vector 5 and longitudinal axis 7 of the trawl 51. Thus also the final points 44 of tapered end portions 34 have all been gathered together and joined at a single point, as indicated by a single reference numeral for final points 44.

### Production Method:

Thus also, FIG. 3 of the instant disclosure teaches a preferred method of producing a trawl system component of the present disclosure selected from a group consisting of a trawl, a belly, an intermediate portion, a tube and a codend, the trawl system component having T90 netting, at least a portion of the trawl system component including a first seam (22) formed of a first panel of netting (21) attached to a second panel of netting (23), the first seam (22) having a seam ratio of less than one, the method of producing the trawl system component comprising the steps of forming the at least a portion of the trawl system component by:
a) selecting for netting forming at least a portion of the first panel of netting (21) mainly netting being netting selected from a group consisting of:
   i) T0 meshes; and
   ii) T90 meshes having a mesh size of 160mm or lesser;
b) selecting for netting forming at least a portion of the second panel of netting (23) mainly netting being T90 netting having a mesh size of one hundred sixty mm or lesser, the netting forming the at least a portion of the second panel of netting having a lesser horizontal stretch measure value than the horizontal stretch measure value of netting forming the at least a portion of the first panel of netting (21);
c) situating the first panel of netting (21) forward of the first seam (22) and situating the second panel of netting (23) aft of the first seam (22); and
d) forming at least a second seam (25) located further aft in the at least a portion of the trawl system component from the location of the first seam (22), the second seam (25) having a third panel of netting (24) situated aft of the second seam (25), the third panel of netting (24) formed of T0 meshes.

In the instant example, the horizontal stretch measure value of the netting in panel 23 measured at both seams 22 and 25 is 2/3 (66.6%) of the horizontal stretch measure value of the nettings in panels 21 and 24, respectively. However, this ratio may vary as needed to obtain a similar length along a horizontal direction on a seam for a pulled taught portion of T90 netting when pulled taught horizontally from its intended orientation in the trawl compared to a pulled taught portion of T0 netting when pulled taught horizontally to its intended orientation in the trawl. This ratio when from .5 to .79 is presently preferred (i.e. the value obtained by dividing the stretch measure of the T90 netting portion by the stretch measure of the other netting portion, whether that other netting is T0 netting, T90 netting of mesh size lesser than 160mm, or other netting, is the "seam ratio"). When the mesh size is 60mm or less, a seam ratio of .66 (2/3) is presently preferred, with from .5 to .75 being presently useful, as experimentally determined. As the mesh size decreases and as the twine diameter increases relative to the mesh size, and thus the long dimension value 9 of the knot 2 increases relative to the mesh size, the seam ratio tends to increase.

Such a construction has also been shown surprisingly useful for codends where either (a) no riblines are used (i.e. the portion of the trawl having the seam lacks riblines); (b) riblines are used that are not hung in shorter than 2% and that can be hung in as much as 10%; and (c) riblines are used where any hang on the ribline is the same or about the same on both sides of the seam.

The teachings of the present disclosure have been shown to be highly advantageous when combined with trawls having bellies and tubes having mesh sizes lesser than 160mm.

When the T90 meshes are formed of mesh sizes lesser than 50mm, it is also most advantageous that the seam ratio be less than 80%, with less than 70% being more preferred and with 2/3 (.666) being yet more preferred. When the T90 meshes are formed of mesh sizes less than 40mm, less than 35mm, and less than 30mm, the seam ratios are preferably .666 (2/3). When the T90 meshes are formed of mesh sizes of 20mm or approximately 20mm, seam ratios of 2/3 (.666) again are preferred but with seam ratios from .5 to .666 being useful as experimentally determined.

### Further Industrial Applicability:

When a portion of a trawl formed of T90 meshes is seamed to a portion of the trawl also formed of T90 meshes that have a mesh size greater than 60mm, and especially greater than 80mm, or that have a ratio of the diameter of the twine relative to the mesh size that is less than two percent (2%), or even less that two and a half percent (2.5%), and sometimes even less than three percent (3%) then sometimes the same seam ratio that applies for seaming T90 netting to T0 netting and that has been taught herein is also applicable, as should be experimentally verified.

In particular: a "knot value" is obtained by dividing the length 9 of the long dimension of knot 2 by the mesh size. When seaming together a first portion and/or panel of T90 netting to a second portion and/or panel of T90 netting, where the knot value is less than 22% and yet more critically when it is less than 20%, and yet even more critically when it is less than 15%, then such T90 netting may be considered as T0 netting for the purpose of the present disclosure, and especially when experiment determines that it should be so considered.

In other words, when a portion of a trawl formed of T90 meshes is seamed to a portion of the trawl formed of (a) T0 meshes; and (b) T90 meshes that have a knot value of less than 22%, then the seam ratio is less than one (1) and preferably is less than .9 (90%), and more preferably is .8 (80%) of less, and more preferably is lesser than .8 (80%), with from .5 to .7 being presently preferred, with .59 to .7 also being presently preferred, with .666 (2/3) presently considered most often useful.

The seam ratios of the instant disclosure as taught herein are especially useful when forming seams including T90 netting and T0 netting where the T90 netting has a "knot value" of at least 7%, and more preferably at least 10%, and yet more preferably at least 12%, and yet again more preferably of at least 15%, and even more preferably of at least 20%, and yet again more preferably of at least 25%, and yet even more preferably of at least 30%, and even more preferably in smaller mesh sizes such as lesser than 60mm of at least 35%, with at least 20% being most useful for mesh sizes lesser than 80mm, and with at least 22% being most useful for mesh sizes smaller than 60mm, and more especially for mesh sizes smaller than 50mm and smaller than 30mm, and with a knot value of at least 25% being most useful for meshes lesser than 50mm, and especially lesser than 40mm, and most critically for meshes lesser than 30mm and lesser than 25mm. A knot value of at least 15%, at least 20%, at least 30% and at least 35% is highly useful for meshes lesser than 30mm, less than 25mm, than 22mm and less than 21mm especially when catching Pearlside fish.

Experimental verification is recommended to determine the best seam ratio in each case, whether when seaming T90 netting to T0 netting, or when seaming T90 netting to other T90 netting having a knot value of lesser than 25%, and yet more especially lesser than 22%, and even more critically of lesser than 20%, and for each particular construction of netting being manufactured, depending upon twine flexibility, elasticity, resistance to twine swelling and other, commencing with the values taught herein. Such experimentation and the results and/or discoveries of such experimentation are intended to be encompassed within the teachings of the instant disclosure and contained within the scope of the present disclosure.

## Claims

1. A trawl system component selected from a group consisting of a trawl (51), a belly (53), an intermediate tube (54) and a codend (55), the trawl system component having T90 netting, at least a portion of the trawl system component including a first seam (22) formed of a first panel of netting (21) attached to a second panel of netting (23), the first seam (22) having a seam ratio of less than one, at least a portion of the trawl system component comprising:
a) netting forming at least a portion of the first panel of netting (21) mainly being netting selected from a group consisting of:
i) T0 meshes; and
ii) T90 meshes having a mesh size of 160mm or lesser;
b) netting forming at least a portion of the second panel of netting (23) mainly being T90 netting having a mesh size of one hundred sixty mm or lesser, the netting forming the at least a portion of the second panel of netting having a lesser horizontal stretch measure value than the horizontal stretch measure value of netting forming the at least a portion of the first panel of netting (21);
c) the first panel of netting (21) being situated forward of the first seam (22) and the second panel of netting (23) being situated aft of the first seam (22); and
d) at least a second seam (25) located further aft in the at least a portion of the trawl system component from the location of the first seam (22), the second seam (25) having a third panel of netting (24) situated aft of the second seam (25), the third panel of netting (24) formed of T0 meshes.

2. The trawl system component of claim 1 where the seam ratio is a seam ratio being selected from a group consisting of:
a) less than .9 (90%); and
b) less than .8 (80%).

3. The trawl system component of claim 1 where the seam ratio is a seam ratio being selected from a group consisting of:
a) from .5 to .7; and
b) from .59 to .7.

4. The trawl system component of claim 1 where the seam ratio is about .666 (2/3).

5. The trawl system component of any one of claims 1 to 4 where the selected trawl system component is the codend (55).

6. The codend (55) of claim 5 where the codend (55) includes a codend terminal end portion (36).

7. The codend (55) of any one of claims 5 to 6 where the codend (55) includes tapered end portions (34).

8. The codend (55) of any one of claims 5 to 7 where the tapered end portions (34) have been joined together.

9. The codend (55) of any one of claims 5 to 8 where the codend (55) is situated aft of an intermediate tube (54).

10. A method of producing a trawl system component selected from a group consisting of a trawl (51), a belly (53), an intermediate tube (54) and a codend (55), the trawl system component having T90 netting, at least a portion of the trawl system component including a first seam (22) formed of a first panel of netting (21) attached to a second panel of netting (23), the first seam (22) having a seam ratio of less than one, the method of producing the trawl system component comprising the steps of forming the at least a portion of the trawl system component by:
a) selecting for netting forming at least a portion of the first panel of netting (21) mainly netting being netting selected from a group consisting of:
i) T0 meshes; and
ii) T90 meshes having a mesh size of 160mm or lesser;
b) selecting for netting forming at least a portion of the second panel of netting (23) mainly netting being T90 netting having a mesh size of one hundred sixty mm or lesser, the netting forming the at least a portion of the second panel of netting having a lesser horizontal stretch measure value than the horizontal stretch measure value of netting forming the at least a portion of the first panel of netting (21);
c) situating the first panel of netting (21) forward of the first seam (22) and situating the second panel of netting (23) aft of the first seam (22); and
d) forming at least a second seam (25) located further aft in the at least a portion of the trawl system component from the location of the first seam (22), the second seam (25) having a third panel of netting (24) situated aft of the second seam (25), the third panel of netting (24) formed of T0 meshes.

11. The method of claim 10 wherein the method further comprises an additional step of selecting for the trawl system component the codend (55).

12. The method of claim 11 wherein the method further comprises an additional step of attaching the codend (55) to the intermediate tube (54).

13. The method of claim 11 wherein the method further comprises an additional step of forming multiple tapered end portions (34) in the region of a codend terminal end (36).

14. The method of claim 13 wherein the method further comprises an additional step of joining together the multiple tapered end portions (34).
